# EUROPÄISCHE PATENTSCHRIFT

(11) **EP 3 187 455 B1**
(45) Veröffentlichungstag und Bekanntmachung des Hinweises auf die Patenterteilung: **01.12.2021**
(21) Anmeldenummer: 16195312.0
(22) Anmeldetag: 24.10.2016
(51) Int. Cl.: B66F 9/075, B66F 9/24

(54) **SYSTEM AUS FLURFÖRDERZEUG UND BATTERIELADEVORRICHTUNG**
SYSTEM COMPRISING INDUSTRIAL TRUCK AND BATTERY CHARGING DEVICE
SYSTEM COMPREANT CHARIOT DE MANUTENTION ET DISPOSITIF DE CHARGE DE BATTERIE

(30) Priorität: 29.12.2015 DE 102015122904; 22.01.2016 DE 102016101079
(43) Veröffentlichungstag der Anmeldung: 05.07.2017
(73) Patentinhaber: STILL GmbH, 22113 Hamburg (DE)
(72) Erfinder: Tödter, Joachim, 22391 Hamburg (DE); Haake, Kai, 21073 Hamburg (DE)
(74) Vertreter: Patentship Patentanwaltsgesellschaft mbH

(56) Entgegenhaltungen:
- WO-A1-2015/148678
- WO-A1-2015/155838
- WO-A1-2016/130184
- DE-A1-102009 007 954
- JP-A- H0 686 470
- JP-A- 2015 179 704
- US-A1- 2012 145 485

## Beschreibung

Die Erfindung betrifft ein System aus einem Flurförderzeug und einer Batterieladevorrichtung. Insbesondere betrifft die Erfindung ein Flurförderzeug mit einer Sekundärspule zur induktiven Aufnahme elektrischer Leistung, um eine Batterie zu laden und ein zugehöriges System.

Bei Flurförderzeugen ist es üblich und Stand der Technik, dass Traktionsbatterien entweder bei einem Mehrschichtbetrieb zum Laden aus einem Batteriefach entnommen und gegen eine aufgeladene Traktionsbatterie ausgewechselt werden, oder der Fahrer gegen Ende seiner Arbeitsschicht ein Ladegerät über eine Steckerverbindung mit der Traktionsbatterie verbindet, um diese während der Arbeitspause aufzuladen. Typischerweise erfolgt dies pro Arbeitsschicht einmal, da eine Traktionsbatterie eines batterieelektrischen Flurförderzeugs im Regelfall so bemessen wird, dass mit einer Ladung der Traktionsbatterie eine komplette Arbeitsschicht gefahren und gearbeitet werden kann.

Überdies ist es bei Blei-Säurebatterie anzustreben, diese mindestens bis zu einem gewissen Maß zu entladen, bevor ein Wiederaufladen erfolgt, da die Technologie dieser Batterien nicht für ein Zwischenladen geeignet ist und sich beispielsweise unerwünschte Memory-Effekte einstellen können oder die Batterielebensdauer durch das Nachladen teilentladener Batterien sinkt.

Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen dass sie gegenüber einem Blei Säureakkumulator eine höhere Energiedichte in Bezug auf Gewicht und/oder Volumen aufweisen und eine andere Technik als eine Blei-Säure Reaktion für die Energiespeicherung nutzen. Hinzu kommt bei vielen Hochleistungsbatterien als Merkmal, dass eine hohe Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Bereits Nickel-Cadmium Batterien weisen zwar keinen erheblichen Gewichtsvorteil auf, haben jedoch eine bis zum dreifachen höhere Energiedichte in Bezug auf das Volumen. Weitere bekannte Technologien für Akkumulatoren bzw. wieder aufladbare Batterien unter Einsatz von Nickel sind beispielsweise Nickel-Metallhydrid, Nickel-Eisen, Nickel-Wasserstoff, Nickel-Zink und Silber-Zink. Daneben sind auch Natrium-Nickelchlorid und Natrium-Schwefel Akkumulatoren bekannt.

Zunehmend in größerem Umfang eingesetzt werden jedoch Lithium-Ionenbatterien, die eine in Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei der Lithium-Ionenbatterie sind ebenfalls unterschiedliche Technologien bekannt, wie beispielsweise Lithium-Polymer, Lithium-Cobaltdioxid, Lithium-Luft, Lithium-Titanat, Lithium-Eisenphosphat, Lithium-Mangan und Zinn-Schwefel-Lithiumionen.

Besonders vorteilhaft ist der Einsatz solcher Hochleistungsbatterien bei Fahrzeugen und beispielsweise Flurförderzeugen, da aufgrund der hohen Energiedichte in Bezug auf das Volumen bei dem vorgegebenen Bauraum für die Batterie eine größere Menge elektrische Energie gespeichert werden kann und somit die Reichweite eines Fahrzeugs bzw. die Einsatzdauer des Flurförderzeugs vergrößert werden kann. Insbesondere ist es jedoch möglich, solche Hochleistungsbatterie und vor allem Lithium-Ionenbatterien zwischenzuladen und somit kurze Arbeitspausen oder sonstige Möglichkeiten zum Wiederaufladen der Traktionsbatterie zu nutzen. Durch ein Zwischenladen wird es auch möglich, eine kleinere Kapazität für die Traktionsbatterie zu wählen und dadurch Kosten einzusparen.

Nachteilig an diesem Stand der Technik ist, dass bei Traktionsbatterien von Flurförderzeugen, wenn kein Wechsel der Batterie erfolgt, sondern beispielsweise nur ein Zwischenladen, dies typischerweise im Fahrzeug geschieht. Dazu muss durch einen Fahrer eine Ladestation angefahren werden und eine Steckerverbindung zwischen der Ladestation und der Traktionsbatterie bzw. dem Flurförderzeug hergestellt werden. Dieses Verfahren ist aufwendig und verschleißanfällig, da es zu einer erhöhten Anzahl von Steckzyklen des Steckers kommt sowie von Biegezyklen des hierfür verschleißanfälligen Batterieanschlusskabels und auch zur Gefahr von Beschädigungen, wie beispielsweise durch ein Überfahren des Kabels oder des Steckers. Für ein zeitlich oftmals nur sehr kurzes Zwischenladen, beispielsweise nur für wenige Minuten, wie dies für Lithium-Ionenbatterien bereits effizient und sinnvoll ist, ist dieser Aufwand im Verhältnis sehr groß und fällt der entstehende Verschleiß überproportional ins Gewicht.

Bekannt ist bei Flurförderzeugen die Übertragung elektrischer Leistung auf induktivem Weg über eine Primärspule und eine Sekundärspule, wobei die Sekundärspule in einem beweglichen Teil eines Hubmastes angeordnet ist und Aggregate bzw. eine Zusatzbatterie im beweglichen Teil des Hubgerüstes mit Energie versorgt.

Aus der JP 2015 179704 A ist ein berührungsloses Ladesystem für ein Flurförderzeug bekannt. Das Ladesystem umfasst eine Primärspule, mittels welcher Energie in eine Sekundärspule des Flurförderzeugs induktiv übertragen wird, zum Laden einer Batterie.

Aus der WO 2015/148678 A1 ist ein auf magnetischer Kopplung basierendes Ladesystem für einen elektrischen PKW bekannt.

Aus der JP H06 86470 A der US 2015260835 A1 und der DE 10 2009 007954 A1 ist jeweils ein Ladesystem für ein Flurförderzeug bekannt. Eine Batterie des Flurförderzeugs wird geladen, indem eine Primärspule induktiv Energie in eine mit der Batterie gekoppelte Sekundärspule des Flurförderzeugs überträgt.

Der vorliegenden Erfindung liegt daher die Aufgabe zugrunde, ein Flurförderzeug sowie ein System aus einem Flurförderzeug und einer Batterieladevorrichtung zur Verfügung zu stellen, das die zuvor genannten Nachteile vermeidet und ein rasches sowie effizientes und kurzes Zwischenladen unter Vermeidung von Verschleiß sowie von möglichen Beschädigungen ermöglicht.

Diese Aufgabe wird durch ein Flurförderzeug mit den Merkmalen des unabhängigen Patentanspruchs 1 und ein System mit den Merkmalen des Patentanspruchs 6 gelöst.

Vorteilhafte Weiterbildungen der Erfindung sind in den Unteransprüchen angegeben.

Die Aufgabe wird erfindungsgemäß dadurch gelöst, dass bei einem Flurförderzeug mit einer Sekundärspule zur induktiven Aufnahme elektrischer Leistung, um eine Batterie zu laden, durch die aufgenommene elektrische Leistung als Batterie eine Traktionsbatterie des batterieelektrisch betriebenen Flurförderzeugs geladen wird und die Sekundärspule flächig an einer der sechs Außenflächen des Flurförderzeugs, insbesondere einer Seitenfläche oder einer Bodenfläche angeordnet ist. Eine Steuerungseinheit des Flurförderzeugs ist dazu ausgebildet, einen Signalpegel der Sekundärspule zu erfassen und aus diesem Signalpegel Positionsanweisungen für eine Platzierung des Flurförderzeugs an einer Ladestation zu errechnen. Die Steuerungseinheit ist dazu ausgebildet, Fahranweisungen für einen Fahrer auf einer Anzeigevorrichtung darzustellen und/oder autonom Fahrbefehle durchzuführen, um das Flurförderzeug mit maximalem Signalpegel in einer Ladestation zu positionieren.

Vorteilhaft wird dadurch der Vorbereitungsprozess für ein Wiederaufladen einer Traktionsbatterie erheblich erleichtert und verkürzt. Allein mit dem Anfahren einer Ladestation kann der Ladevorgang sofort beginnen. Da keine mechanischen Verbindungen hergestellt werden müssen, wie etwa eine Steckverbindung, und auch kein Kabel bewegt werden muss, erhöhen sich die Lebensdauer der Ladestation wie auch eines Batterieanschlusskabels und der Steckverbindungen in einem Flurförderzeug, da diese bei dem häufigen und oftmaligen Zwischenladen nicht betätigt werden müssen. Die Sekundärspule wird dabei durch die Ausrichtung des ganzen Flurförderzeugs an einer Ladestation in geringen Abstand und in eine gegenüberliegende Position zu einer Primärspule der Ladestation verbracht. Als Position an dem Flurförderzeug für die Sekundärspule sind daher alle Positionen geeignet, bei denen sich leicht in einer Ladestation gebäudefest eine entsprechende Gegenposition für die Primärspule verwirklichen lässt. Vorteilhaft sind daher flächige Anordnungen der Sekundärspule an dem Flurförderzeug auf einer der sechs Oberflächen. Dabei kann die Sekundärspule auf die Oberfläche aufgesetzt sein oder direkt unter der Oberfläche in Bauteile der Verkleidung bzw. allgemein des Flurförderzeugs integriert sein. Die Sekundärspule kann auch in ein Bauteil integriert sein, dass ein Bauteil des Flurförderzeugs ersetzt, beispielsweise eine Verkleidung als Außenhaut des Flurförderzeugs. Prinzipiell ist jedoch auch eine orthogonale Ausrichtung zu diesen Flächen denkbar. Heute gibt es bei zahlreichen Fahrzeugen Öffnungen im Boden, durch die die Batterien mithilfe von Handgabelhubwagen oder eines weiteren Staplers aus dem Fahrzeug bzw. Flurförderzeug entnommen werden können. Dazu muss eine seitliche Tür geöffnet werden, durch die die Batterie entnommen wird. Die Sekundärspule lässt sich an der Unterseite der Batterien im Bereich der Öffnung anordnen oder auch seitlich an der Tür. In Verbindung mit einer auf der Batterie angeordneten Ladeelektronik ergibt sich damit eine Batterieeinheit, die, integriert ins Fahrzeug, autark induktiv geladen werden kann.

Der Abstand und die Ausrichtung zwischen Primärspule und Sekundärspule sind für eine optimale Leistungsübertragung von großer Bedeutung. Abhängig von der Einbauposition der Sekundärspule kann es jedoch schwierig sein die genaue Position einzuschätzen, beispielsweise bei einer Montage der Sekundärspule im Bodenbereich des Flurförderzeugs, wenn die genaue relative Position der Sekundärspule gegenüber einer in den Boden eingelassen Primärspule für den Fahrer nicht zu erkennen ist. Aus einem Signalpegel der Sekundärspule bzw. dessen Maximum kann jedoch erkannt werden, ob eine solche optimale Positionierung erreicht worden ist und aus der Veränderung des Signalpegels bei einer Bewegung, in welche Richtung eine Optimierung erreicht werden kann. Eine alternative Möglichkeit, durch Sensoren die Positionierung des Flurförderzeugs zu erfassen sind Kameras, die unter dem Flurförderzeug, seitlich an diesem oder oberhalb das erfasste Bild mit einem abgespeicherten Vorgabebild abgleichen. Das Vorgabebild entspricht der perspektivischen Ansicht, die vorliegen muss, wenn das Flurförderzeug richtig ausgerichtet ist. Damit kann die exakte Ausrichtung des Flurförderzeugs ebenfalls sichergestellt werden. Des Weiteren ist auch eine Positionsbestimmung mit Laserscannern, durch Magnetstreifen oder Magnetnägel denkbar.

Durch Fahranweisungen für einen Fahrer wird ein halbaktives System verwirklicht, in dem die Effizienz der Energieübertragung bzw. der Signalpegel der Sekundärspule gemessen wird und aus den Abweichungen vom Optimum Handlungsanweisungen in Form der Fahranweisungen für einen Fahrer auf einer Anzeigevorrichtung dargestellt werden. Wenn die Steuerungseinheit die Fahrbefehle selbst umsetzt und das Fahrzeug teilautonom oder autonom bewegt, wird ein aktives System umgesetzt, durch das das Flurförderzeug in einer Ladestation automatisch in die optimale Position bewegt wird.

Vorteilhaft kann die Sekundärspule an einer Seitenwand zwischen einer Vorderachse und einer Hinterachse im Bereich eines Batteriefachs angeordnet sein.

Eine Seitenwand des Flurförderzeugs ermöglicht das Heranfahren an eine Ladestation auf einfache Art und Weise. Der Bereich zwischen den Achsen, in dem ein Batteriefach im Regelfall angeordnet ist, bietet hierfür eine geeignete und ausreichend große Fläche.

Die Sekundärspule kann an einer Rückseite des Flurförderzeugs angeordnet sein, insbesondere an einer Rückseite eines Gegengewichts.

Vorteilhaft weist das Flurförderzeug eine Sende-/Empfangsanlage für den Datenaustausch mit einer Ladestation auf.

Ein solches kabelloses Kommunikationssystem kann funkbasiert sein oder auch optisch. Über dieses können allgemein Daten zwischen Ladestation und Flurförderzeug ausgetauscht werden. Insbesondere können diese Daten zur Steuerung und Regelung des Ladeprozesses benutzt werden.

Vorteilhaft ist die Sekundärspule in einer Montageeinheit angeordnet, die an dem Flurförderzeug montiert werden kann.

Bei einer voll integrierten Lösung ist die Sekundärspule in das Flurförderzeug eingebaut und beispielsweise im Unterbodenbodenbereich in den Fahrzeugboden eingelassen. In diesem Fall ist die Sekundärspule mit zugehörigen Komponenten nicht einfach demontierbar. Vorteilhaft kann jedoch die Sekundärspule mit weiteren Komponenten zusammengefasst sein, wie etwa einer erforderlichen Steuerung, und gegebenenfalls in einem eigenen Gehäuse angeordnet sein, die zusammen eine Montageeinheit bilden. Eine solche Montageeinheit kann dann leicht nachgerüstet werden und beispielsweise auf eine der infrage kommenden Flächen des Flurförderzeugs befestigt werden.

Die Sekundärspule kann federnd am Fahrzeug montiert werden, um Beschädigungen zu vermeiden.

Die Aufgabe wird auch gelöst durch ein System aus einem Flurförderzeug wie es zuvor beschrieben wurden sowie einer Ladestation mit einer Primärspule zur Übertragung elektrischer Leistung auf induktivem Weg zu der Sekundärspule.

Das System weist die bereits zuvor geschilderten Vorteile auf.

Vorteilhaft sind an der Ladestation optische Markierungen für die Ausrichtung des Flurförderzeugs vorgesehen.

Durch solche optischen Markierungen kann der Fahrer beim Heranfahren an eine Ladestation überprüfen, ob das Flurförderzeug sich in der richtigen Position befindet und dieses entsprechend ausrichten.

An der Ladestation können Führungen für das Flurförderzeug vorgesehen sind, durch die dieses beim Hineinfahren in die Ladestation an die richtige Position ausgerichtet wird.

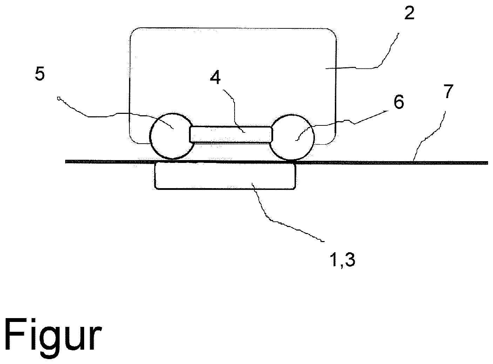

Weitere Vorteile und Einzelheiten der Erfindung werden anhand der in den schematischen Figuren dargestellten Ausführungsbeispiele näher erläutert. Hierbei zeigt die Figur schematisch eine Ladestation 1 mit einem darüber stehenden erfindungsgemäßen Flurförderzeug 2. Die in eine Fahrbahn 7 eingelassene Ladestation 1 weist eine Primärspule 3 auf, während das Flurförderzeug 2 an der Unterseite angeordnet eine entsprechende Sekundärspule 4 zwischen einer Vorderachse 5 und eine Hinterachse 6 aufweist. Von der Primärspule 3 wird induktiv in die Sekundärspule 4 des Flurförderzeugs 2 elektrische Energie übertragen, um beispielsweise eine Traktionsbatterie des Flurförderzeugs 2 aufzuladen.

## Patentansprüche

1. Flurförderzeug mit einer Sekundärspule (4) zur induktiven Aufnahme elektrischer Leistung, um eine Batterie zu laden,
wobei durch die aufgenommene elektrische Leistung als Batterie eine Traktionsbatterie des batterieelektrisch betriebenen Flurförderzeugs (2) geladen wird und die Sekundärspule (4) flächig an einer der sechs Außenflächen des Flurförderzeugs (2), insbesondere einer Seitenfläche oder einer Bodenfläche, angeordnet ist, und
wobei eine Steuerungseinheit des Flurförderzeugs (2) dazu ausgebildet ist, einen Signalpegel der Sekundärspule (4) zu erfassen und aus diesem Signalpegel Positionsanweisungen für eine Platzierung des Flurförderzeugs (2) an einer Ladestation (1) zu errechnen,
**dadurch gekennzeichnet,**
**dass** die Steuerungseinheit dazu ausgebildet ist, Fahranweisungen für einen Fahrer auf einer Anzeigevorrichtung darzustellen und/oder autonom Fahrbefehle durchzuführen, um das Flurförderzeug (2) mit maximalem Signalpegel in einer Ladestation (1) zu positionieren.

2. Flurförderzeug nach Anspruch 1,
**dadurch gekennzeichnet,**
**dass** die Sekundärspule (4) an einer Seitenwand zwischen einer Vorderachse und einer Hinterachse im Bereich eines Batteriefachs angeordnet ist.

3. Flurförderzeug nach Anspruch 1 oder 2,
**dadurch gekennzeichnet,**
**dass** die Sekundärspule (4) an einer Rückseite des Flurförderzeugs angeordnet ist, insbesondere an einer Rückseite eines Gegengewichts.

4. Flurförderzeug nach einem der Ansprüche 1 bis 3,
**dadurch gekennzeichnet,**
**dass** das Flurförderzeug (2) eine Sende-/Empfangsanlage für den Datenaustausch mit einer Ladestation (1) aufweist.

5. Flurförderzeug nach einem der Ansprüche 1 bis 3,
**dadurch gekennzeichnet,**
**dass** die Sekundärspule (4) in einer Montageeinheit angeordnet ist, die an dem Flurförderzeug (2) montiert werden kann.

6. System aus einem Flurförderzeug (2) nach einem der vorhergehenden Ansprüche sowie einer Ladestation (1) mit einer Primärspule (3) zur Übertragung elektrischer Leistung auf induktivem Weg zu der Sekundärspule (4).

7. System nach Anspruch 6,
**dadurch gekennzeichnet,**
**dass** an der Ladestation (1) optische Markierungen für die Ausrichtung des Flurförderzeugs (2) vorgesehen sind.

8. System nach Anspruch 6 oder 7,
**dadurch gekennzeichnet,**
**dass** an der Ladestation (1) Führungen für das Flurförderzeug (2) vorgesehen sind, durch die dieses beim Hineinfahren in die Ladestation (1) an die richtige Position ausgerichtet wird.

## Claims

1. Industrial truck having a secondary coil (4) for inductively receiving electrical power to charge a battery,
wherein, as the battery, a traction battery of the industrial truck (2) operated electrically by battery is charged by way of the received electrical power, and the secondary coil (4) is arranged in a planar manner on one of the six external surfaces of the industrial truck (2), in particular a side surface or a bottom surface, and wherein a control unit of the industrial truck (2) is configured to detect a signal level of the secondary coil (4) and, from this signal level, to calculate position instructions for positioning the industrial truck (2) at a charging station (1),
**characterized**
**in that** the control unit is configured to display driving instructions for a driver on a display apparatus and/or to autonomously perform driving commands to position the industrial truck (2) in a charging station (1) with the maximum signal level.

2. Industrial truck according to Claim 1,
**characterized**
**in that** the secondary coil (4) is arranged on a side wall between a front axle and a rear axle in the region of a battery compartment.

3. Industrial truck according to Claim 1 or 2,
**characterized**
**in that** the secondary coil (4) is arranged on a rear side of the industrial truck, in particular on a rear side of a counterweight.

4. Industrial truck according to one of Claims 1 to 3,
**characterized**
**in that** the industrial truck (2) has a transmitting/receiving system for exchanging data with a charging station (1).

5. Industrial truck according to one of Claims 1 to 3,
**characterized**
**in that** the secondary coil (4) is arranged in an assembly unit that can be assembled on the industrial truck (2).

6. System comprising an industrial truck (2) according to one of the preceding claims and a charging station (1) having a primary coil (3) for transferring electrical power inductively to the secondary coil (4).

7. System according to Claim 6,
**characterized**
**in that** optical markings for aligning the industrial truck (2) are provided at the charging station (1).

8. System according to Claim 6 or 7,
**characterized**
**in that** guides for the industrial truck (2) are provided at the charging station (1), by means of which the industrial truck (2) is aligned with the correct position when driving into the charging station (1).

## Revendications

1. Chariot de manutention comprenant une bobine secondaire (4) pour l'absorption inductive de puissance électrique pour charger une batterie,
la puissance électrique absorbée chargeant comme batterie une batterie de traction du chariot de manutention (2) fonctionnant sur batterie électrique, et la bobine secondaire (4) étant disposée en surface sur l'une des six surfaces extérieures du chariot de manutention (2), en particulier sur une surface latérale ou une surface inférieure, et
une unité de commande du chariot de manutention (2) étant réalisée pour détecter un niveau de signal de la bobine secondaire (4) et pour calculer à partir de ce niveau de signal des indications de position pour un placement du chariot de manutention (2) à une station de charge (1),
**caractérisé en ce que** l'unité de commande est réalisée pour représenter des indications de déplacement pour un conducteur sur un dispositif d'affichage, et/ou pour exécuter de façon autonome des ordres de déplacement pour positionner le chariot de manutention (2) ayant le niveau de signal maximal dans une station de charge (1).

2. Chariot de manutention selon la revendication 1, **caractérisé en ce que** la bobine secondaire (4) est disposée sur une paroi latérale entre un essieu avant et un essieu arrière dans la zone d'un compartiment de batterie.

3. Chariot de manutention selon la revendication 1 ou 2, **caractérisé en ce que** la bobine secondaire (4) est disposée sur une face arrière du chariot de manutention, en particulier sur une face arrière d'un contrepoids.

4. Chariot de manutention selon l'une quelconque des revendications 1 à 3, **caractérisé en ce que** le chariot de manutention (2) présente une installation d'émission/réception pour l'échange de données avec une station de charge (1).

5. Chariot de manutention selon l'une quelconque des revendications 1 à 3, **caractérisé en ce que** la bobine secondaire (4) est disposée dans une unité de montage qui peut être montée sur le chariot de manutention (2).

6. Système composé d'un chariot de manutention (2) selon l'une quelconque des revendications précédentes ainsi que d'une station de charge (1) comprenant une bobine primaire (3) pour transmettre de la puissance électrique par induction à la bobine secondaire (4).

7. Système selon la revendication 6, **caractérisé en ce que** des repères optiques pour l'alignement du chariot de manutention (2) sont prévus à la station de charge (1).

8. Système selon la revendication 6 ou 7, **caractérisé en ce qu'**à la station de charge (1), des dispositifs de guidage pour le chariot de manutention (2) sont prévus qui l'alignent sur la position correcte lorsqu'il entre dans la station de charge (1).
